# EUROPEAN PATENT SPECIFICATION

(11) **EP 2 045 129 B1**
(45) Date of publication and mention of the grant of the patent: **14.12.2011**
(21) Application number: 08165622.5
(22) Date of filing: 01.10.2008
(51) Int. Cl.: B60Q 3/00, B60Q 3/02

(54) **Interior lamp with a wire harness attachment structure**
Innenlampe mit einer Kabelbaumbefestigungsstruktur
Lampe d'intérieur avec une structure de fixation d'un faisceau de fils électriques

(30) Priority: 02.10.2007 JP 2007259250
(43) Date of publication of application: 08.04.2009
(73) Proprietor: Toyota Boshoku Kabushiki Kaisha, Kariya-shi Aichi 448-8651 (JP)
(72) Inventor: Kojima, Natsuki c/o TOYOTA BOSHOKU KABUSHIKI KAISHA, Kariya-shi Aichi 448-8651 (JP); Yaoichi, Shinichi c/o TOYOTA BOSHOKU KABUSHIKI KAISHA, Kariya-shi Aichi 448-8651 (JP); Omura, Naomi c/o TOYOTA BOSHOKU KABUSHIKI KAISHA, Kariya-shi Aichi 448-8651 (JP)
(74) Representative: TBK

(56) References cited:
- DE-A1- 2 245 500
- DE-A1- 19 704 067
- JP-A- 2001 101 932
- US-A- 3 778 609
- US-A1- 2006 050 524

## Description

### BACKGROUND OF THE INVENTION

### Field of the Invention

The present invention relates to an interior lamp with a wire harness attachment structure said interior lamp being equipped with a mobile light source. More specifically, the present invention relates to an interior lamp with a wire harness attachment structure capable of suppressing a disconnection and not applying an external force between a terminal connector and the wire harness, regardless of deformation of the wire harness connected between the light source and a fixing portion, which are capable of relative rotation or relative movement, resulting from movement of the light source.

### Description of the Related Art

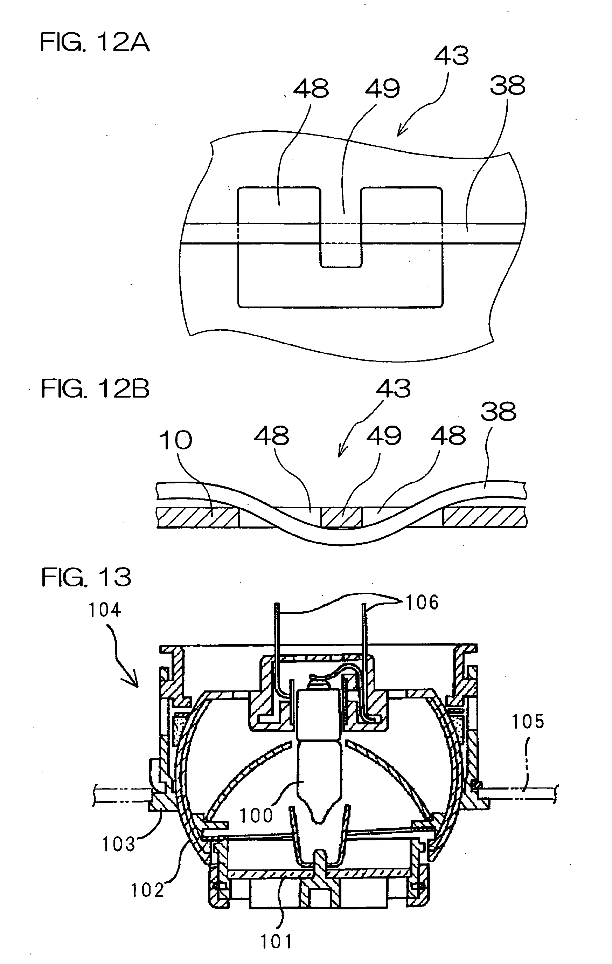

Related art for an interior lamp mounted in the ceiling of a roofed vehicle such as an automobile is known in which rotation of a light source portion can change a direction of illumination. An example of this type of interior lamp is shown in FIG. 13, where an interior lamp 104 is provided with a lamp body 102 that supports a light source 100 and a lens 101, and a lamp housing 103 that rotatably supports the lamp body 102 by a spherical joint (see Patent Document 1). According to the interior lamp 104, an illumination direction can be arbitrarily changed by rotating the lamp body 102 with respect to the lamp housing 103 fixed to a ceiling 105.
In this interior lamp 104, an electrode terminal 106 of the light source 100 and a control board (not shown) on the lamp housing 103 side are connected by an unregulated wire harness.

[Patent Document 1] Utility Model Application Publication No. JP-A-H06-042414

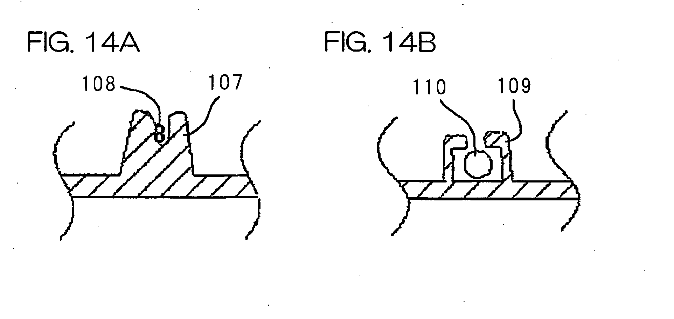

In the interior lamp 104 according to related art, however, since an unregulated wire harness connects the light source 100 and the control board which relatively rotate around one another, the wire harness bends and stretches due to rotation of the lamp body 102. As a consequence, a load is applied to a portion of the wire harness that attaches to a terminal connector. The connector attachment portion of the wire harness has no sheath, and therefore has less strength compared to other sheathed portions. Over a long period, the repetition of an applied load, as well as bending and stretching, may result in a disconnection.
In general, known methods for fixing the wire harness include the use of a binding band, or the use of tape or bonding. But these must all be prepared separately, which increases costs and operation processes.
Furthermore, known structures for fixing wire harnesses that are integratedly formed with a part on a route of the wire harness include a structure in which a wire harness 108 bundled using vinyl tape is fitted into a U-shaped groove 107 as shown in FIG. 14A, and a structure in which a wire harness 110 is accommodated in a hook 109 shown in FIG. 14B, for example.
However, in the case of the U-shaped groove 107, the tape must be wound around the wire harness 108, which increases the number of man-hours. Also, since there is nothing over an open portion of the U-shaped groove 107, the wire harness can easily become displaced due to a reaction force from bending. Meanwhile, in the case of the hook 109, it is completely impossible to regulate movement of the wire harness 110 in a length direction. These structures are used for regulating the route of an immobile wire harness. Therefore, an adequate effect cannot be obtained when used to fix a mobile wire harness.

Furthermore, an interior lamp according to the preamble of claim 1 is known from US 2006/050524 A1.

### SUMMARY OF THE INVENTION

In view of the foregoing situation, it is an object of the present invention to provide an attachment structure capable of suppressing a disconnection and not applying an external force between a terminal connector and a wire harness, regardless of deformation of the wire harness connected between a light source and a fixing portion, which are both capable of relative rotation or relative movement, resulting from movement of the light source.

This object is solved with an interior lamp having the features of claim 1.

According to the attachment structure of the present invention, the wire harness is fixed at two locations by the light source-side fixing means and the switch-side fixing means. During rotation or movement of the illuminating part, the wire harness deforms between the light source-side fixing means and the switch-side fixing means, but does not deform between a terminal and the light source-side fixing means and does not deform between another terminal and the switch-side fixing means. Therefore, an external force does not act on the connector portion of the terminal even when the wire harness deforms. Accordingly, it is possible to prevent disconnection at a portion of the wire harness that attaches to the connectors.
In addition, the light source-side fixing means and the switch-side fixing means are respectively and integratedly provided with members structuring the lamp. Therefore, less parts are needed compared to separately preparing members for the fixing means, which can suppress increases in operation processes and costs to a great extent.
The light source-side fixing means and the switch-side fixing means may be disposed so as to respectively fix the wire harness at a position that does not allow a load generated by bending during mounting of the wire harness to affect the connectors. In such case, in addition to decreasing a load generated by deformation of the wire harness during rotation or movement of the illuminating part, it is also possible to decrease a load generated by bending of the mounted wire harness itself. Thus, disconnection at a portion of the wire harness attached to the connecters can be further prevented.
The light source-side fixing means and the switch-side fixing means may be clamp structures. In such case, a simple structure with strong fixing power can be obtained.
If the clamp structure includes a retaining portion with elasticity, and fixing portions that are disposed on both end sides of the retaining portion, wherein the wire harness is pressed and fixed between the fixing portions by the elasticity of the retaining portion, and a space between the retaining portion and the fixing portions before mounting of the wire harness is narrower than a thickness of the wire harness, then the wire harness can be fitted at two locations between the retaining portion and the fixing portions. Therefore, the wire harness can be reliably fixed. Moreover, using this clamp facilitates parts manufacturing because a simple structure with only three components is achieved.
If the switch-side fixing member has a through hole that the wire harness can move through, and the light source-side fixing means is disposed in proximity to the through hole, then the wire harness can reliably pass through the through hole. Therefore, during rotation or movement of the illuminating part, the wire harness between the fixing means can deform so as to move within the through hole, and thus the possibility of the wire harness bending and becoming entangled with another member can be suppressed.

### BRIEF DESCRIPTION OF THE DRAWINGS

FIG. 1 is a vertical cross-sectional view showing a state in which an interior lamp is sectioned along a first rotational shaft;
FIG. 2 is a vertical cross-sectional view showing a state in which the interior lamp is sectioned along a second rotational shaft;
FIG. 3 is an exploded assembly drawing of the interior lamp;
FIG. 4 is a perspective view showing the first rotational shaft and the second rotational shaft;
FIG. 5 is a vertical cross-sectional view showing a state in which an illuminating part is rotated a maximum extent and a wire harness is bent;
FIG. 6 is a vertical cross-sectional view showing a state during an operation to mount the interior lamp to a ceiling;
FIGS. 7A to 7C are perspective views showing rotation patterns of the illuminating part, where FIG. 7A shows the illuminating part at a neutral position, FIG. 7B shows the illuminating part rotated around the first rotational shaft, and FIG. 7C shows the illuminating part rotated around the second rotational shaft;
FIG. 8 is a perspective view showing a positional relationship between switch-side fixing means and light source-side fixing means;
FIG. 9 is a perspective view showing the switch-side fixing means;
FIG. 10 is a cross-sectional view showing the switch-side fixing means;
FIG. 11A and 11B are a plane view and a cross-sectional view showing another embodiment of the fixing means, respectively;
FIG. 12A and 12B are a plane view and a cross-sectional view of yet another embodiment of the fixing means, respectively;
FIG. 13 is a cross-sectional view showing an interior lamp according to related art; and
FIGS. 14A and 14B are cross-sectional views showing a wire harness attachment structure according to related art, where FIG. 14A shows a U-shaped groove and FIG. 14B shows a hook.

### DESCRIPTION OF REFERENCE NUMERALS

1; interior lamp, 2; light source, 3; lens, 4; illuminating part, 5; ring type switch, 6; housing, 38; wire harness, 40; light source-side fixing means, 41; light source-side connector, 43; switch-side fixing means, 44, 44'; fixing portion, 45; retaining portion, 46; through hole and 47; switch-side connector.

### DETAILED DESCRIPTION OF THE PREFERRED EMBODIMENT

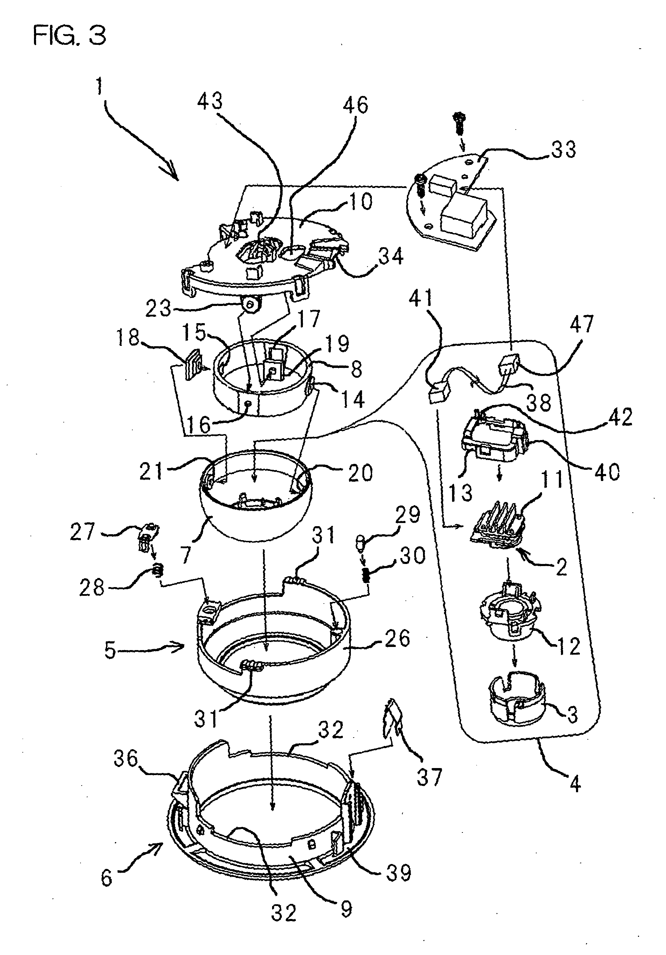

An attachment structure according to the present invention is a wire harness attachment structure for an interior lamp including an illuminating part that is provided with a light source; a switch that performs selection of a lighting control for the light source; a housing that rotatably or movably supports the illuminating part and fixedly supports the switch; and a wire harness that connects the light source and the switch, wherein the attachment structure attaches the wire harness that connects the light source and the switch.
The above-mentioned "light source" is not particularly limited in terms of operation mode, shape, size, material, quantity and the like, provided that the light source is mobile, i.e., rotatable, movable or the like, with respect to the housing. Here, rotation of the illuminating part with respect to the housing refers to changing an illumination direction while maintaining the same position, whereas movement of the illuminating part with respect to the housing refers to changing the position of the illuminating part itself.
The above-mentioned "switch" is not particularly limited in terms of shape, size, material, quantity and the like, provided that the switch is fixedly supported with respect to the housing. The above-mentioned "wire harness" is not particularly limited in terms of shape, size, material, quantity and the like, provided that the wire harness connects the light source and the switch.
In the attachment structure according to the present invention, a light source-side portion of the wire harness is fixed to a light source-side member (e.g. a lens holder 7, an LED holder 12, an LED hold plate 13, and the like in FIG. 3) by light source-side fixing means, whereas a switch-side portion of the wire harness is fixed to a switch-side member (e.g. an outer bezel 9, an outer plate 10, a substrate 33, and the like in FIG. 3) by switch-side fixing means.
The above-mentioned "light source-side fixing means" and "switch-side fixing means" are not particularly limited in terms of shape, size, material, quantity and the like, provided that the wire harness deforms between these fixing means during rotation or movement of the illuminating part, but does not deform between the respective fixing means and terminals, and also provided that these fixing means are respectively included in a light source-side fixing member structuring the illuminating part and a switch-side fixing member structuring the housing. The fixing means can be disposed, for example, so as to respectively fix the wire harness at a position that does not allow a load generated by bending during mounting of the wire harness to affect the connectors.
Possible modes for the fixing means include: so-called clamp structure that is a fixing mode in which a retaining portion with elasticity and fixing portions disposed on both end sides of the retaining portion are provided, and the elasticity of the retaining portion presses the wire harness between the fixing portions, a fixing mode in which the wire harness is directly fitted between the retaining portion with elasticity and the fixing portions or the like; and a fixing mode in which the wire harness is fastened by a band-like fastening device. From the standpoint of fewer parts and a simpler structure, the most preferred of the above modes is the one that has the retaining portion with elasticity and the fixing portions disposed on both end sides of the retaining portion, wherein the elasticity of the retaining portion presses the wire harness between the fixing portions.
A member that separates both terminals of the wire harness can be formed with a through hole that the wire harness can move through, and at least one of the light source-side fixing means and the switch-side fixing means can be disposed in proximity to the through hole. Here, "in proximity to the through hole" refers to a location where the wire harness can be fixed so as to secure a position at which the wire harness can reliably move through the through hole, and at which the wire harness does not interfere or become entangled with other parts when the wire harness moves. Specifically, it can refer to a location where, when the through hole is projected as a plane, a mobility range of the illuminating part is accommodated within the projected range of the through hole.
A more compact lamp can be manufactured with the wire harness attachment structure according to the present embodiment. Therefore, a lamp using the present embodiment is particularly well suited for placement in a ceiling with limited space such as that in an automobile or the like. In addition, the present interior lamp can also be used as a lamp necessitating rotation of the illuminating part to obtain an arbitrary illumination direction. Conceivable examples include interior illumination in a conveyance such as a vehicle, ship, or airplane, and illumination embedded in household furnishings.

### Embodiment

Hereinafter, a specific description of the present invention will be given based on an embodiment with reference to the accompanying drawings. An attachment structure according to the present embodiment is a wire harness attachment structure for a lamp used as an interior light of a passenger vehicle.

### (1) Structure of the Interior Lamp

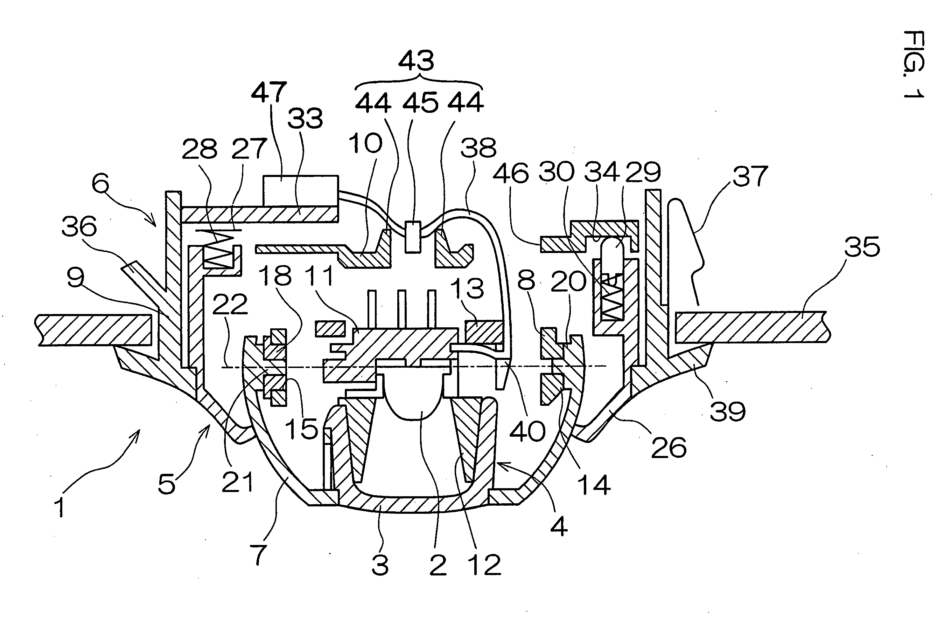

As FIGS. 1 to 3 illustrate, an interior lamp 1 according to the present embodiment includes an illuminating part 4 provided with a light source 2 and a lens 3; a ring type switch 5 that performs an on-off control of the light source 2; a lens holder 7 that supports the illuminating part 4; a support ring 8 that supports the lens holder 7; and a housing 6 that supports the support ring 8 and the ring type switch 5. In addition, an inner edge of the ring type switch 5 and a surface of the lens holder 7 are positioned so as to be in the vicinity of one another and/or in mutual contact. The housing 6, the ring type switch 5, the lens holder 7, and the illuminating part 4 are formed in a configuration of concentric circles.
The housing 6 is circular and made of synthetic resin, and also includes an outer bezel 9 exposed to an interior side, as well as an outer plate 10 resembling a cover attached to a back side thereof. Other parts are accommodated within the outer bezel 9 and the outer plate 10.
The illuminating part 4 includes an LED unit 11 equipped with an LED serving as the light source 2; an LED holder 12 that prevents the diffusion of light rays from the light source 2; the lens 3, and an LED hold plate 13 integrated with these. The illuminating part 4 is fixed to the lens holder 7.

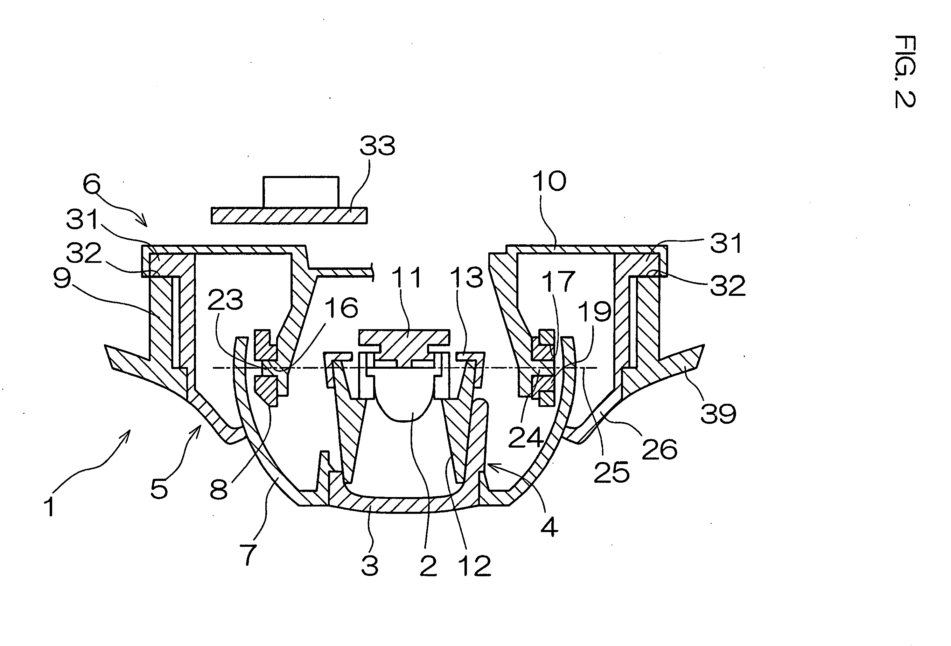

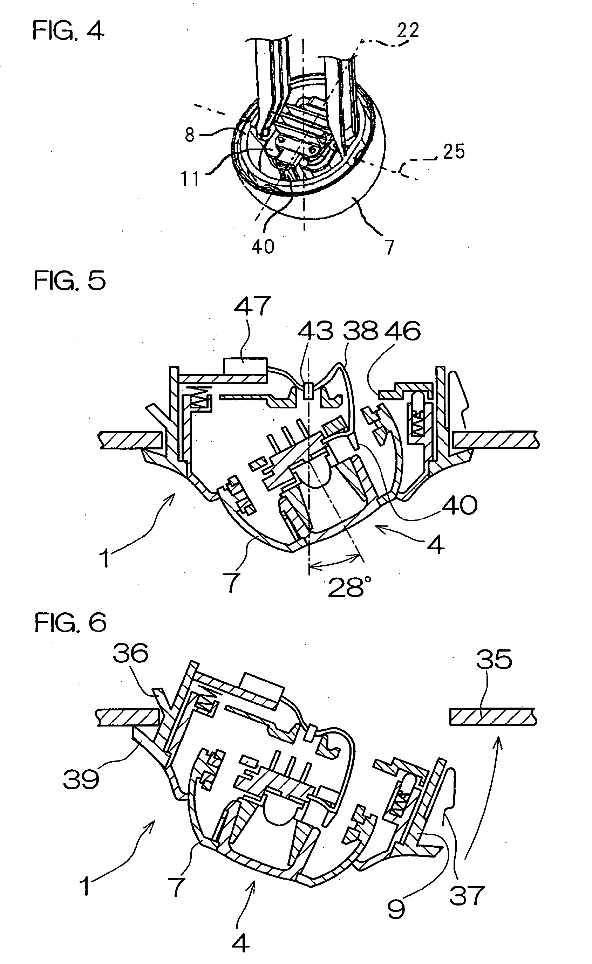

An inner side of the lens holder 7 is provided with the support ring 8, which has a toric shape. The support ring 8 includes a first rotational shaft end 14 that projects to an outer peripheral side; a first shim-receiving hole 15 formed on a side opposite of the first rotational shaft end 14; a second bearing 16 formed at a position displaced 90 degrees from the first rotational shaft end 14; and a second shim-receiving hole 17 formed on a side opposite of the second bearing 16. A first shim 18 and a second shim 19 are rotatably provided in the first shim-receiving hole 15 and the second shim-receiving hole 17, respectively. The shims 18 and 19 are made of elastomers.
The inner side of the lens holder 7 is formed with a first bearing 20 that receives the first rotational shaft end 14 of the support ring 8 and also formed with a first shim receiver 21 that holds the first shim 18. Furthermore, the first bearing 20 is combined with the first rotational shaft end 14, and the first shim receiver 21 is combined with the first shim 18 provided in the first shim-receiving hole 15, so as to structure a first rotational shaft 22. Accordingly, the lens holder 7 is supported by the support ring 8 so as to enable rotation and holding at an arbitrary angle (see FIG. 1).
The outer plate 10 is formed from a bottom portion 10a that is a circular disc body whose center is provided with a hole; two support columns 10b and 10c that are provided standing along a periphery of the hole of the bottom portion 10a so as to face one another; and an outer peripheral portion 10d that serves as an outer peripheral portion of the bottom portion 10a and is connected with an end portion of the outer bezel 9. An end side of the support column 10b is formed with a second rotational shaft end 23 that is received by the second bearing 16 of the support ring 8. Meanwhile, an end side of the support column 10c is formed with a second shim receiver 24 that holds the second shim 19. Furthermore, the second bearing 16 is combined with the second rotational shaft end 23, and the second shim receiver 24 is combined with the second shim 19 provided in the second shim-receiving hole 17, so as to structure a second rotational shaft 25. Accordingly, the support ring 8 is supported by the outer plate 10 so as to enable rotation and holding at an arbitrary angle (see FIG. 2).
Here, the first rotational shaft 22 that connects the lens holder 7 and the support ring 8 forms a 90-degree angle with the second rotational shaft 25 that connects the support ring 8 and the outer plate 10 (see FIG. 4). Additionally, a maximum rotational angle of the rotational shafts is 56 degrees (see FIG. 5).

An outer side of the lens holder 7 is provided with the ring type switch 5. The ring type switch 5 includes a toric switch knob 26; a metal switch plate 27 that serves as a switch contact; a switch spring 28 that biases the switch plate 27; and a pin 29 and a pin spring 30 for achieving a feeling of detent during rotation of the switch. A peripheral edge of the switch knob 26 has a pair of flanges 31 that are provided at even intervals, that is, at positions that equally divide the switch knob 26. The flange 31 serves as a rotational shaft of the switch knob 26, wherein the flange 31 is accommodated in a guide hole 32 formed by the outer bezel 9 and the outer plate 10, and guided to within a predetermined rotational angle.
The switch plate 27 contacts a contact pattern of a substrate 33 mounted on the outer plate 10. The pin 29 is movably set in three concave portions 34 formed in the outer plate 10. By rotating the switch knob 26, the pin 29 biased toward the concave portion 34 by the pin spring 30 moves from one concave portion 34 to another concave portion 34. Accordingly, it is possible to achieve a sensation of the state of the switch changing. At the same time, the switch plate 27 moves with respect to the substrate 33, which changes a state of connection with the contact pattern. In the present embodiment, the three modes of regular lighting and non-lighting of the lamp and lighting associated with the opening and closing of a door can be selected.
The outer bezel 9 includes a flange 39 exposed to an interior side, as well as a tab 36 and an engagement spring 37 that catch on a back side of a ceiling 35. The engagement spring 37 and the tab 36 are disposed on opposite sides, and are structured such that the engagement spring 37 elastically deforms during mounting of the interior lamp 1 to the ceiling 35 to allow mounting. After mounting, the engagement spring 37 and the tab 36 prevent detachment by catching on a back surface of the ceiling 35. The outer plate 10 is attached with the substrate 33.

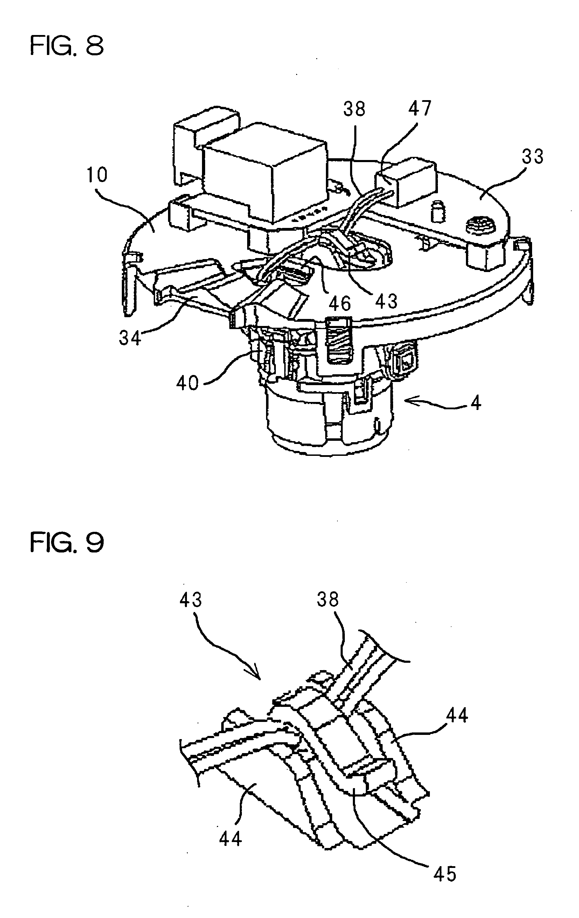

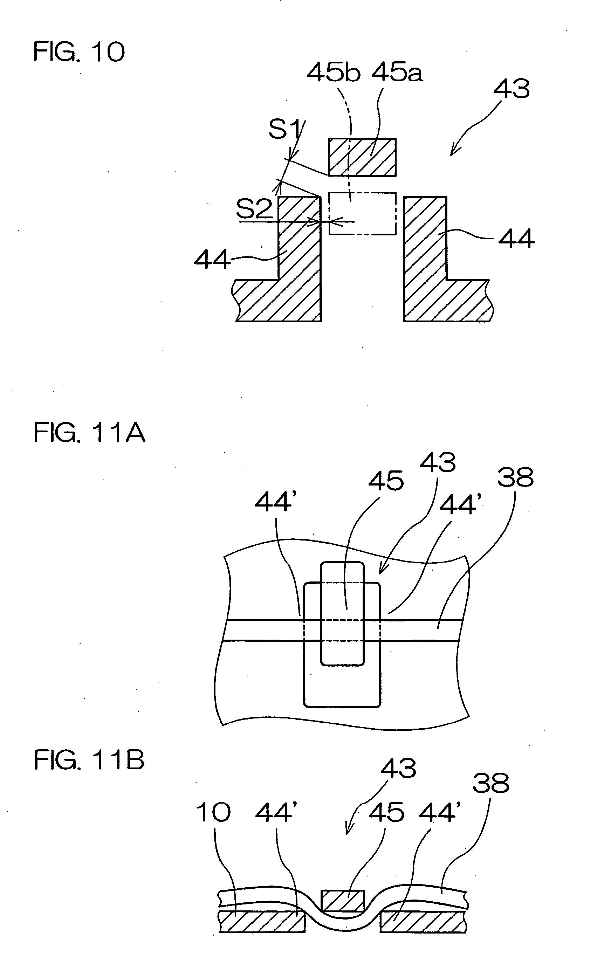

The substrate 33 and the LED unit 11 are electrically connected via a wire harness 38. Here, the LED hold plate 13 is integratedly formed with light source-side fixing means 40 that fix a portion on the LED unit 11 side of the wire harness 38 to the illuminating part 4, and a U-shaped groove 42 that regulates a route of the wire harness 38 in proximity to a connector 41 on the LED unit 11 side. Furthermore, the outer plate 10 is integratedly formed with switch-side fixing means 43 that fix a portion on the switch side of the wire harness 38.
The light source-side fixing means 40 and the switch-side fixing means 43 are formed, for example, from clamps as shown in FIGS. 8 and 9. Namely, the switch-side fixing means 43 includes a retaining portion 45 that presses the wire harness 38 downward, and a fixing portion 44 that is provided at two locations on both end sides of the retaining portion 45 and that together with the retaining portion 45 sandwiches the wire harness 38. The retaining portion 45 has elasticity and is integratedly formed with the outer plate 10. The retaining portion 45 also has a shape in which an end portion thereof projects in a hook shape downward so that the wire harness does not deviate sideward and become displaced. In addition, the fixing portions 44 are also integratedly formed with the outer plate 10, and are disposed so as to project from a surface of the outer plate 10. A projection height of the fixing portions 44 is set to a height that enables the wire harness 38 to comfortably contact a switch-side connector 47. Thus during mounting of the wire harness 38, a load generated by bending of the wire harness 38 itself is prevented from being applied to a portion of the wire harness 38 connected with the switch-side connector 47.
Regarding a positional relationship between the fixing portion 44 and the retaining portion 45 here, as shown in FIG. 10, before mounting of the wire harness 38 and with no external force applied, a space between closest portions of the fixing portion 44 and retaining portions 45a and 45b (S1 when a surface pressing the wire harness such as the retaining portion 45a exists on an outer side of a surface of the fixing portion 44 pressing the wire harness, and S2 when a surface pressing the wire harness such as the retaining portion 45b exists on an inner side of the surface of the fixing portion 44 pressing the wire harness) is narrower than a thickness of the wire harness 38. In such case, when the wire harness 38 is inserted between the fixing portion 44 and the retaining portion 45, the retaining portion 45 presses and fixes the wire harness 38 between the fixing portions 44. It should be noted that the light source-side fixing means 40 similarly includes a fixing portion at two locations, and a retaining portion with elasticity that presses and fixes the wire harness 38 between the fixing portions. Before mounting of the wire harness 38, a space between closest portions of the fixing portion and the retaining portion is narrower than the thickness of the wire harness 38 (details are not shown).
In addition, the outer plate 10 is formed with a through hole 46 that the wire harness 38 can move through. The light source-side fixing means 40 are disposed in proximity to the through hole 46.

One interior lamp 1 is provided at a position around a rearview mirror, which is also the ceiling 35 above a front seat of a passenger vehicle. Thus, it is possible to illuminate a wide area ranging from the hands of a passenger in the front seat to a luggage space behind a rear seat.

### (2) Operation of the Interior Lamp

The assembly sequence of the interior lamp 1 with the above-described structure will be explained next.
First, to assemble the illuminating part 4, the LED holder 12 is mounted to the lens 3 and then the LED unit 11 is placed thereupon, followed by the LED hold plate 13. The LED unit 11 is connected with the light source-side connector 41 of the wire harness 38. The wire harness 38 is passed through the U-shaped groove 42 of the LED hold plate 13 and goes half around a periphery of the LED hold plate 13 while avoiding a heat sink of the LED unit 11, after which the wire harness 38 is fixed by the light source-side fixing means 40.
The illuminating part 4 is then mounted to the lens holder 7. Next, the support ring 8 attached with the two shims 18 and 19 is mounted to the inner side of the lens holder 7.
At such time, the first rotational shaft end 14 is supported by the first bearing 20, and the first shim 18 is simultaneously supported by the first shim-receiving hole 15. The support ring 8 is further mounted to the outer plate 10. At such time, the second rotational shaft end 23 of the outer plate 10 is supported by the second bearing 16, and the second shim 19 is simultaneously supported by the second shim receiver 24.
Meanwhile, an inner side of the outer bezel 9 is mounted with the switch knob 26. At such time, the flanges 31 of the switch knob 26 enter the guide hole 32 of the outer bezel 9. The switch plate 27 and the switch spring 28 are subsequently mounted, and the pin 29 and the pin spring 30 are also mounted.
Next, the outer plate 10 assembled with the illuminating part 4, the lens holder 7, and the support ring 8 is attached to the outer bezel 9. At such time, the wire harness 38 is pulled toward an outer side of the outer plate 10 via the through hole 46. The outer side of the outer plate 10 is further screwed with the substrate 33 and the substitute 33 is connected with the switch-side connector 47 of the wire harness 38. A vicinity of the connector 47 of the wire harness 38 is then fixed by the switch-side fixing means 43.
When attaching the interior lamp 1 to the ceiling 35, as FIG. 6 shows, the tab 36 of the outer bezel 9 diagonally catches on an edge of a mounting hole of the ceiling 35. The opposite side is then lifted up, after which the engagement spring 37 elastically deforms and presses into the back of the ceiling 35. Thus, detachment is prevented by the tab 36 and the engagement spring 37 catching on the back of the ceiling 35.

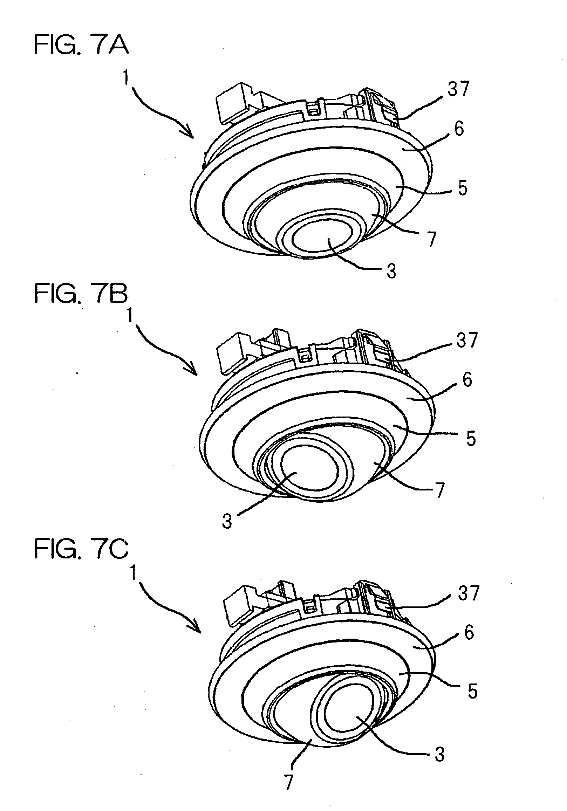

The operation of the interior lamp 1 with the above-described structure will be explained next.
When a user grasps and rotates the switch knob 26, the switch plate 27 moves and switches between on and off states of the light source 2. Furthermore, when the user grasps the lens holder 7 for the application of external force to change an optical axis, as FIG. 7 shows, the lens holder 7 is suitably rotated with respect to the outer plate 10 via the two rotational shafts 22 and 25 of the support ring 8. Accordingly, an arbitrary position within a range of mobility can be illuminated. Here, the rotational shafts 22 and 25 use the shims 18 and 19, and therefore it is possible to maintain an arbitrary angle as set.
During rotation, as shown in FIG. 5, the wire harness 38 only deforms between the light source-side fixing means 40 and the switch-side fixing means 43, and no external force is applied near the connectors 41 and 47 on both terminals of the wire harness 38.

### (3) Effects of the Embodiment

According to the attachment structure of the wire harness 38 in the interior lamp 1 of the present embodiment, the switch-side fixing means 43 fix a vicinity of the terminal of the wire harness 38. Therefore, it is possible to shorten a distance between the connector 41 and the switch-side fixing means 43, and keep the possibility of the wire harness 38 becoming entangled with other members low.
In the present embodiment, the fixing portion 44 of the switch-side fixing means 43 projects as shown in FIG. 1. Therefore, a difference in height between the switch-side connector 47 of the wire harness 38 and the switch-side fixing means 43 can be reduced, and a load on the connector 47 generated by bending of the wire harness 38 can be greatly decreased.
In the present embodiment, the fixing means 40 and 43 are clamps, and therefore a simple structure with strong fixing power can be obtained. Furthermore, the respective clamps include the fixing portion 44 at two locations and the retaining portion 45, with the space between the fixing portion 44 and the retaining portion 45 narrower than the wire harness 38. Therefore, the wire harness 38 can be fitted and fixed at two locations between the fixing portions 44 and the retaining portions 45.
Moreover, in the present embodiment, the outer plate 10 that is a member separating both terminals of the wire harness 38 is formed with the through hole 46 that the wire harness 38 can move through, and the light source-side fixing means 40 is disposed in proximity to the through hole 46. Therefore, the wire harness 38 fixed by the light source-side fixing means 40 passes unchanged straight through the through hole 46. For this reason, even during rotation of the illuminating part 4, the wire harness 38 from the light source-side fixing means 40 moves in a length direction within the through hole 46, and thus the possibility of the wire harness 38 becoming entangled with another member can be suppressed.

It should be noted that the present invention is not limited to the embodiment described above, and various modifications depending on the purpose and application are possible that fall within the scope of the present invention. Namely, in the above embodiment, the switch-side fixing means 43 is fixed in proximity to the terminal of the wire harness 38. However, the present invention is not limited to this, and the switch-side fixing means 43 may be fixed at a location away from the terminal of the wire harness 38, for example. In this case as well, the wire harness 38 deforms only between the fixing means 40 and 43, and a load generated from bending of the wire harness 38 itself is not applied to the switch-side connector 47. Therefore, it is possible to prevent the application of an external force near the connectors 41 and 47 on both terminals of the wire harness 38. Accordingly, a position at which the wire harness 38 is retained can be set as appropriate in line with various design requirements.
According to the present embodiment, the fixing portion 44 of the switch-side fixing means 43 projects from the surface of the outer plate 10. However, the present invention is not limited to this, and as shown in FIG. 11, a fixing portion 44' may be provided on the same plane as the surface of the outer plate 10. Thus, a more simple structure can be achieved.
Also, in the above embodiment the fixing means 40 and 43 are clamps. However, the present invention is not limited to this, and as shown in FIG. 12, for example, a structure may be employed in which a through hole 48 and a projecting portion 49 provided so as to project toward an inward direction of the through hole 48 are used, and the wire harness 38 is bendingly deformed and held by the projecting portion 49. Thus, movement of the wire harness 38 in the length direction can be regulated, and the wire harness 38 can be fixed without applying a load on the connector portion.
In the present embodiment, the outer plate 10 is formed with the through hole 46 that the wire harness 38 can move through, and the light source-side fixing means 40 is disposed in proximity to the through hole 46. However, the present invention is not limited to this, and the wire harness 38 may detour around a member that separates both terminals of the wire harness 38. Alternatively, in the above embodiment, the substrate 33 is provided on the outer side of the outer plate 10 and the switch-side connector is connected on the outer side of the housing 6. However, the present invention is not limited to this, and the substrate 33 may be provided on an inner side of the outer plate 10 and the switch-side connector 47 there-connected. If a member thus connecting the connectors 41 and 47 shares the same space (a space on an inward side of the housing 6) and there is no member separating both terminals of the wire harness, then the through hole 46 can be omitted.
Furthermore, in the present embodiment, the wire harness attachment structure is applied to an interior lamp of an automobile or the like. However, the present invention is not limited to this, and can be widely applied to any lamp in general with a mobile light source.

The present invention is utilized as a wire harness attachment structure in a lamp equipped with a mobile light source. More specifically, the present invention is well suited for use as an attachment structure capable of suppressing a disconnection and not applying an external force between a terminal connector and a wire harness, regardless of deformation of the wire harness connected between a light source and a fixing portion, which are both capable of relative rotation or relative movement, resulting from movement of the light source.
The present invention provides a wire harness attachment structure for a lamp capable of suppressing a disconnection and not applying an external force between a terminal connector and a wire harness, regardless of deformation of the wire harness connected between a light source and a fixing portion, which are both capable of relative rotation or relative movement, resulting from movement of the light source. The present wire harness attachment structure is a wire harness attachment structure for a lamp attached with a wire harness 38 that connects a light source 2 and a switch 5. The wire harness attachment structure includes light source-side fixing means 40 that has a clamp structure and fixes a light source-side portion of the wire harness to the light source side, and switch-side fixing means 43 that has a clamp structure and fixes a switch-side portion of the wire harness to the switch side.

## Claims

1. An interior lamp (1) with a wire harness attachment structure, comprising:
an illuminating part (4) that is provided with a light source (2);
a switch (5) that performs selection of a lighting control for said light source (2);
a housing (6) that rotatably or movably supports said illuminating part (4) and that fixedly supports said switch (5); and
a wire harness (38); **characterized in that** the wire harness (38) has connectors (41, 47) that connect said light source (2) and said switch (5) to both ends of said wire harness (38), wherein
said illuminating part (4) has a light source-side fixing member (7, 12, 13) provided with light source-side fixing means (40) for fixing a light source-side portion of said wire harness (38) to said light source side,
said housing (6) has a switch-side fixing member (9, 10, 33) provided with switch-side fixing means (43) for fixing a switch-side portion of said wire harness (38) to said switch side, and
said wire harness (38) deforms between said light source-side fixing means (40) and said switch-side fixing means (43) during rotation or movement of said illuminating part (4), but does not deform between said light source-side fixing means (40) and said light source-side connector (41) and does not deform between said switch-side fixing means (43) and said switch-side connector (47).

2. An interior lamp (1) according to claim 1, wherein said light source-side fixing means (40) and said switch-side fixing means (43) are disposed so as to respectively fix said wire harness (38) at a position that does not allow a load generated by bending during mounting of said wire harness (38) to affect a portion of said wire harness (38) connected with said connectors (41, 47) between said light source-side connector (41) of said wire harness (38) and said light source-side fixing means (40) and between said switch-side connector (47) of said wire harness (38) and said switch-side fixing means (43).

3. An interior lamp (1) according to claim 1 or 2, wherein said light source-side fixing means (40) and said switch-side fixing means (43) are both a clamp structure.

4. An interior lamp (1) according to claim 3, wherein
said clamp structure includes a retaining portion (45, 45a, 45b) with elasticity that presses said wire harness, and fixing portions (44, 44') that are disposed on both end sides of said retaining portion (45, 45a, 45b),
said retaining portion (45, 45a, 45b) presses and fixes said wire harness (38) between said fixing portions, a space (S1, S2) between said retaining portion (45, 45a, 45b) and said fixing portions (44, 44') before mounting of said wire harness (38) is narrower than a thickness of said wire harness (38), and
said wire harness (38) after mounting is sandwiched by said retaining portion (45, 45a, 45b) and said fixing portions due to the elasticity of said retaining portion (45, 45a, 45b).

5. An interior lamp (1) according to any one of claims 1 to 4, wherein
said switch-side fixing member (9, 10, 33) has a through hole (46) that said wire harness (38) can move through, and
said light source-side fixing means (40) is disposed in proximity to said through hole (46).

## Patentansprüche

1. Innenleuchte (1) mit einer Kabelstrangbefestigungsstruktur, die folgendes aufweist:
einen Beleuchtungsabschnitt (4), der mit einer Lichtquelle (2) versehen ist;
einem Schalter (5), der eine Auswahl einer Lichtsteuerung für die Lichtquelle (2) durchführt;
ein Gehäuse (6), das den Beleuchtungsabschnitt (4) drehbar oder bewegbar stützt und den Schalter (5) fest stützt; und
einen Kabelstrang (38); **dadurch gekennzeichnet, dass** der Kabelstrang (38) Verbinder (41, 47) hat, die die Lichtquelle (2) und den Schalter (5) mit beiden Enden des Kabelstrangs (38) verbinden, wobei
der Beleuchtungsabschnitt (4) ein lichtquellenseitiges Befestigungselement (7, 12, 13) hat, das mit einem lichtquellenseitigen Befestigungsmittel (40) zum Befestigen eines lichtquellenseitigen Abschnitts des Kabelstrangs (38) an der Lichtquellenseite versehen ist,
wobei das Gehäuse (6) ein schalterseitiges Befestigungselement (9, 10, 33) hat, das mit einem schalterseitigen Befestigungsmittel (43) zum Befestigen eines schalterseitigen Abschnitts des Kabelstrangs (38) an der Schalterseite versehen ist, und
der Kabelstrang (38) sich während der Drehung oder der Bewegung des Beleuchtungsabschnitts (4) zwischen dem lichtquellenseitigen Befestigungsmittel (40) und dem schalterseitigen Befestigungsmittel (43) verformt, sich jedoch nicht zwischen dem lichtquellenseitigen Befestigungsmittel (40) und dem lichtquellenseitigen Verbinder (41) verformt und sich nicht zwischen dem schalterseitigen Befestigungsmittel (43) und dem schalterseitigen Verbinder (47) verformt.

2. Innenleuchte (1) gemäß Anspruch 1, wobei das lichtquellenseitige Befestigungsmittel (40) und das schalterseitige Befestigungsmittel (43) so angeordnet sind, dass sie jeweils den Kabelstrang (38) an einer Stelle fixieren, die einer durch Biegung während der Montage des Kabelstrangs (38) erzeugten Last nicht ermöglichen, einen Abschnitt des Kabelstrangs (38) zu beeinträchtigen, der zwischen dem lichtquellenseitigen Verbinder (41) des Kabelstrangs (38) und dem lichtquellenseitigen Befestigungsmittel (40) und zwischen dem schalterseitigen Verbinder (47) des Kabelstrangs (38) und dem schalterseitigen Befestigungsmittel (43) mit den Verbindern (41, 47) verbunden ist.

3. Innenleuchte (1) gemäß Anspruch 1 oder 2, wobei das lichtquellenseitige Befestigungsmittel (40) und das schalterseitige Befestigungsmittel (43) beide eine Klemmenstruktur sind.

4. Innenleuchte (1) gemäß Anspruch 3, wobei
die Klemmenstruktur einen Halteabschnitt (45, 45a, 45b), der eine Elastizität hat, die den Kabelstrang drückt, und Befestigungsabschnitte (44, 44') aufweist, die an beiden Endseiten des Halteabschnitts (45, 45a, 45b) angeordnet sind,
wobei der Halteabschnitt (45, 45a, 45b) den Kabelstrang (38) zwischen den Befestigungsabschnitten drückt und befestigt, ein Raum (S1, S2) zwischen dem Halteabschnitt (45, 45a, 45b) und den Befestigungsabschnitten (44, 44') vor der Montage des Kabelstrangs (38) enger als eine Dicke des Kabelstrangs (38) ist, und
der Kabelstrang (38) nach der Montage infolge der Elastizität des Halteabschnitts (45, 45a, 45b) zwischen den Halteabschnitt (45, 45a, 45b) und die Befestigungsabschnitte eingelegt ist.

5. Innenleuchte (1) gemäß einem der Ansprüche 1 to 4, wobei
das schalterseitige Befestigungselement (9, 10, 33) ein Durchgangsloch (46) hat, durch das sich der Kabelstrang (38) hindurch bewegen kann, und
das lichtquellenseitige Befestigungsmittel (40) in der Nähe des Durchgangslochs (46) angeordnet ist.

## Revendications

1. Lampe d'intérieur (1) avec une structure de fixation d'un faisceau électrique, comprenant :
une partie d'éclairage (4) qui est prévue avec une source de lumière (2) ;
un commutateur (5) qui réalise la sélection d'une commande d'éclairage pour ladite source de lumière (2) ;
un boîtier (6) qui supporte en rotation ou en déplacement ladite partie d'éclairage (4) et qui supporte de manière fixe ledit commutateur (5) ; et
un faisceau électrique (38) ; **caractérisée en ce que** le faisceau électrique (38) a des connecteurs (41, 47) qui relient ladite source de lumière (2) et ledit commutateur (5) aux deux extrémités dudit faisceau électrique (38), où
ladite partie d'éclairage (4) a des éléments de fixation (7, 12, 13) côté source de lumière prévus avec un moyen de fixation (40) côté source de lumière pour fixer une partie côté source de lumière dudit faisceau électrique (38) audit côté source de lumière,
ledit boîtier (6) a un élément de fixation (9, 10, 33) côté commutateur prévu avec un moyen de fixation (43) côté commutateur pour fixer une partie côté commutateur dudit faisceau électrique (38) audit côté commutateur, et
ledit faisceau électrique (38) se déforme entre ledit moyen de fixation (40) côté source de lumière et ledit moyen de fixation (43) côté commutateur pendant la rotation ou le déplacement de ladite partie d'éclairage (4), mais ne se déforme pas entre ledit moyen de fixation (40) côté source de lumière et ledit connecteur (41) côté source de lumière et ne se déforme pas entre ledit moyen de fixation (43) côté commutateur et ledit connecteur (47) côté commutateur.

2. Lampe d'intérieur (1) selon la revendication 1, dans laquelle ledit moyen de fixation (40) côté source de lumière et ledit moyen de fixation (43) côté commutateur sont disposés de manière à fixer respectivement ledit faisceau électrique (38) dans une position qui ne permet pas à une charge générée par pliage lors du montage dudit faisceau électrique (38) d'affecter une partie dudit faisceau électrique (38) relié auxdits connecteurs (41, 47) entre ledit connecteur (41) côté source de lumière dudit faisceau électrique (38) et ledit moyen de fixation (40) côté source de lumière et entre ledit connecteur (47) côté commutateur dudit faisceau électrique et ledit moyen de fixation (43) côté commutateur.

3. Lampe d'intérieur (1) selon la revendication 1 ou 2, dans laquelle ledit moyen de fixation (40) côté source de lumière et ledit moyen de fixation (43) côté commutateur ont une structure de serrage.

4. Lampe d'intérieur (1) selon la revendication 3, dans laquelle
ladite structure de serrage comporte une partie de retenue (45, 45a, 45b) avec élasticité qui presse ledit faisceau électrique, et des parties de fixation (44, 44') qui sont disposées sur les deux côtés d'extrémité de ladite partie de retenue (45, 45a, 45b),
ladite partie de retenue (45, 45a, 45b) presse et fixe ledit faisceau électrique (38) entre lesdites parties de fixation, un espace (S1, S2) entre ladite partie de retenue (45, 45a, 45b) et lesdites parties de fixation (44, 44') avant le montage dudit faisceau électrique (38) est plus étroit qu'une épaisseur dudit faisceau électrique (38), et
ledit faisceau électrique (38) après le montage, est pris en sandwich par ladite partie de retenue (45, 45a, 45b) et lesdites parties de fixation en raison de l'élasticité de ladite partie de retenue (45, 45a, 45b).

5. Lampe d'intérieur (1) selon l'une quelconque des revendications 1 à 4, dans laquelle
ledit élément de fixation (9, 10, 33) côté commutateur possède un trou traversant (46) à travers lequel ledit faisceau électrique (38) peut se déplacer, et
ledit moyen de fixation (40) côté source de lumière est disposé à proximité dudit trou traversant (46).
